# EUROPEAN PATENT SPECIFICATION

(11) **EP 4 343 909 B1**
(45) Date of publication and mention of the grant of the patent: **13.05.2026**
(21) Application number: 23756678.1
(22) Date of filing: 17.02.2023
(51) Int. Cl.: H01M 10/04, H01M 10/42, H01M 10/44, H01M 50/105, H01M 50/211, H01M 50/578

(54) **BATTERY CELL PRESSURIZATION DEVICE AND BATTERY CELL CHARGING/DISCHARGING DEVICE INCLUDING SAME**
BATTERIEZELLENDRUCKBEAUFSCHLAGUNGVORRICHTUNG UND BATTERIEZELLENLADE/-ENTLADEVORRICHTUNG DAMIT
DISPOSITIF DE PRESSURISATION DE CELLULE DE BATTERIE ET DISPOSITIF DE CHARGE/DÉCHARGE DE CELLULE DE BATTERIE LE COMPRENANT

(30) Priority: 21.02.2022 KR 20220022268
(43) Date of publication of application: 27.03.2024
(73) Proprietor: LG Energy Solution, Ltd., Seoul 07335 (KR)
(72) Inventor: CHOI, Lak Young, Daejeon 34122 (KR); WOO, Seunghe, Daejeon 34122 (KR); KIM, Ji Young, Daejeon 34122 (KR)
(74) Representative: Goddar, Heinz J.
(86) International application number: PCT/KR2023/002340
(87) International publication number: WO 2023/158266

(56) References cited:
- JP-A- 2008 147 010
- JP-A- 2014 056 778
- JP-B2- 5 382 134
- KR-A- 20210 098 635
- KR-A- 20220 011 319
- KR-B1- 102 088 272
- US-A1- 2016 315 296

## Description

### [Technical Field]

This application claims the benefit of priority based on Korean Patent Application No. 10-2022-0022268 filed on February 21, 2022.

The present disclosure relates to a battery cell pressurization device and a battery cell charging and discharging device comprising the same.

### [Background Art]

As technology development and demand for mobile devices are increasing, rechargeable secondary batteries are widely used as energy sources for various mobile devices. In addition, the secondary batteries are also attracting attention as an energy source for electric vehicles, hybrid vehicles, etc., which are proposed as a solution to air pollution caused by conventional gasoline vehicles or diesel vehicles.

The secondary batteries are classified into coin-type batteries, cylindrical batteries, prismatic batteries, and pouch-type batteries depending on the shape of the battery case. Among them, since the pouch-type battery uses a pouch exterior material composed of a multilayer film of a metal layer (foil) and a synthetic resin layer coated on the upper and lower surfaces of the metal layer to construct the exterior, it is attracting a lot of attention because the weight of the battery can be significantly reduced as compared to a cylindrical or prismatic type that uses a metal can, and thus it has the advantage of enabling the battery to be lightweight and being able to change into various shapes.

A pouch-type battery is generally manufactured through a process of activating a battery cell after a process of assembling a battery. In general, the activation process comprises a process of pressurizing the battery cell with a jig, and charging and discharging by applying current to the battery cell up to a predetermined voltage. In order to activate the positive electrode active material and create a stable surface film (SEI, Solid Electrolyte Interface) on the negative electrode during the first cycle, this activation process must necessarily be accompanied.

In this activation process, a large amount of gas is generated inside the battery cell. If the gas generated inside the battery cell is not efficiently removed, as the central portion of the pouch exterior material swells, it not only causes deformation of the battery and deterioration of the performance of the battery such as capacity and output, but also adversely affects the lifetime of the battery.

### [Prior Art Document]

### [Patent Document]

(Patent Document 0001) Korean Laid-open Patent Publication No. 10-2019-0072289 (2019.06.25)

JP 2014-056778 A describes an energization method of a secondary battery which allows for long term repeated charge/discharge and high speed charging while preventing deterioration of an electrode part, and a secondary battery and an energization device. US 2016 / 0 315 296 A1 describes a high-capacity power storage device, including a positive electrode, a negative electrode, an exterior body, and an electrolyte. The outer periphery of each of the positive electrode active material layer and the negative electrode active material layer is a closed curve. The exterior body includes a film and a thermocompression-bonded region. The inner periphery of the thermocompression-bonded region is a closed curve. The electrolyte, the positive electrode active material layer, and the negative electrode active material layer are in a region surrounded by the thermocompression-bonded region.

### [Disclosure]

### [Technical Problem]

It is one of the objects of the present invention to provide a battery cell pressurization device capable of isotropically pressurizing a battery cell and a battery cell charging and discharging device comprising the same.

It is another object of the present invention to provide a battery cell pressurization device capable of preventing damage to a battery cell due to pressurization and a short circuit defect caused therefrom, and a battery cell charging and discharging device comprising the same.

It is yet another object of the present invention to provide a battery cell pressurization device capable of preventing deterioration in performance and lifetime of a battery cell due to an activation process, and a battery cell charging and discharging device comprising the same.

### [Technical Solution]

In one embodiment, the present invention provides a battery cell pressurization device according to claim 1 comprising a case configured tc receive a battery cell; and a fluid inside of the case pressurizing the battery cell, wherein the case comprises an opening configured to pass an electrically conductive member through the opening to connect the battery cell to a charger/discharger and applying a current to the battery cell. The fluid isotropically pressurizes the battery cell during an activation process of charging/discharging the battery cell with the charger/discharger. The battery cell comprises a positive electrode, a negative electrode and a solid electrolyte. At least two among a size of the positive electrode, a size of the negative electrode, and a size of the solid electrolyte are different from each other.

In another embodiment, the present invention provides a battery cell charging and discharging device comprising the battery cell pressurization device according to any one of claims 1 to 7 and the charger/discharger for charging/discharging a battery cell pressurized by the battery cell pressurization device.

### [Advantageous Effects]

As one of the effects of the present invention, a battery cell pressurization device includes fluid isotropically pressurizing a battery cell and a battery cell charging and discharging device comprising the same.

As another object of the present invention, a battery cell pressurization device may prevent damage to a battery cell due to pressurization and a short circuit defect caused therefrom, and a battery cell charging and discharging device comprising the same.

As yet another object of the present invention, a battery cell pressurization device may prevent deterioration in performance and lifetime of a battery cell due to an activation process, and a battery cell charging and discharging device comprising the same.

### [Description of Drawings]

FIG. 1 shows a perspective view of a conventional battery cell pressurization device.
FIG. 2 shows a cross-sectional view of a battery cell pressurized by a conventional battery cell pressurization device.
FIG. 3 is a perspective view of a battery cell pressurization device according to an embodiment of the present invention and a battery cell charging and discharging device comprising the same.
FIG. 4 is a cross-sectional view of a battery cell pressurized by a battery cell pressurization device according to an embodiment of the present invention.

### [Best Model

Hereinafter, an embodiment of the present invention will be described in detail with reference to the accompanying drawings. In the drawings, all or part of each configuration may be exaggerated for convenience of description.

In addition, it will be apparent to those skilled in the art that the present invention is not limited to the accompanying drawings or the contents described in this specification, and the present invention can be implemented in various forms without departing from the present invention.

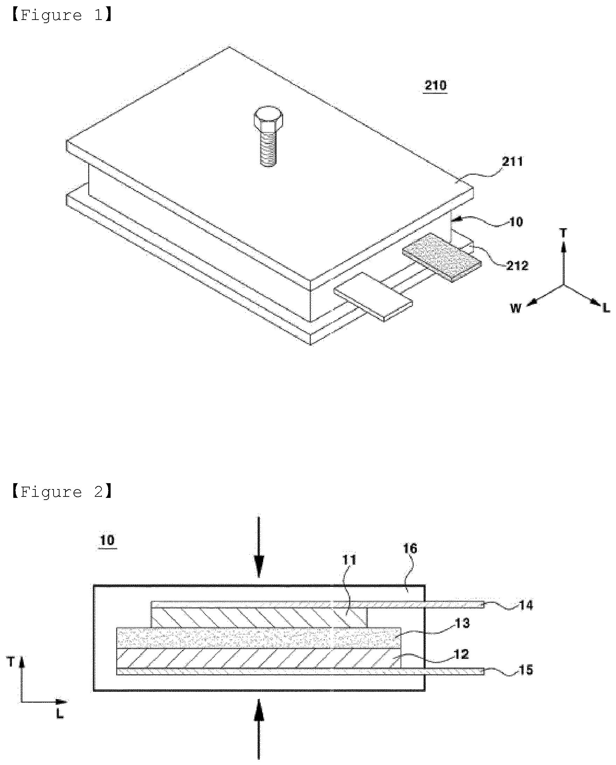

FIG. 1 shows a perspective view of a conventional battery cell pressurization device.

FIG. 2 shows a cross-sectional view of a battery cell pressurized by a conventional battery cell pressurization device.

In the activation process, there is a case where the battery cell (10) is pressurized with the battery cell pressurization device (210) including the jigs (211, 212). Specifically, there is a case where the battery cell (10) is disposed between the jigs (211, 212) disposed facing each other of the battery cell pressurization device (210), and both sides of the battery cell (10) are pressed. For example, Patent Document 1 discloses a pressure jig for charging/discharging of a pouch-type secondary battery comprising a first plate-like member and a second plate-like member configured to press one or more pouch-type secondary batteries inserted into the spaced apart space which is formed by being composed of a plate shape and spaced apart at a predetermined distance while facing each other.

The battery cell (10) pressurized by the battery cell pressurization device includes a positive electrode (11), a negative electrode (12) and a solid electrolyte (13). In addition, a positive electrode lead (14) and a negative electrode lead (15) connected to each of the positive electrode (11) and the negative electrode (12) may be further comprised.

The battery cell (10) may be a pouch-type battery cell in which the positive electrode (11), the negative electrode (12) and the solid electrolyte (13) of the battery cell (10) are embedded in the pouch (16), and in which some of the leads (14, 15) are exposed to the outside of the pouch (16). The pouch-type battery cell (10) may be manufactured by placing the solid electrolyte (13) between the positive electrode (11) and the negative electrode (12) and applying a cold isostatic press (CIP) or a warm isostatic press (WIP) to bond the layers, and then by attaching the positive electrode lead (14) and the negative electrode lead (15), putting the formed electrode assembly into the pouch (16) and sealing it.

Meanwhile, at least two of the size of the positive electrode (11), the size of the negative electrode (12), and the size of the solid electrolyte (13) of the battery cell (10) are different from each other. For example, the size of the positive electrode (11) may be smaller than the size of the negative electrode (12) and the size of the solid electrolyte (13), respectively. The size may mean at least one of a length in the longitudinal direction (L) and a length in the width direction (W).

If the battery cell (10) is uniaxially pressurized with the conventional battery cell pressurization device (210), damage such as cracks in the battery cell and short circuit defect may occur due to the difference in size among the positive electrode (11), the negative electrode (12), and the solid electrolyte (13). For example, if the size of the positive electrode (11) is smaller than the size of the solid electrolyte (13), cracks may occur in the solid electrolyte (13) in contact with the positive electrode (11), and as a result, the positive electrode (11) and the negative electrode (12) may come into contact with each other or lithium may be deposited during charging/discharging, resulting in a short circuit defect. This may lead to deterioration in performance and lifetime of the battery cell. Recently, the solid electrolyte (13) tends to be thinned to less than 30*µ*m, and in the battery cell (10) containing such a thin film solid electrolyte (13), the possibility of occurrence of the aforementioned problems is further increased.

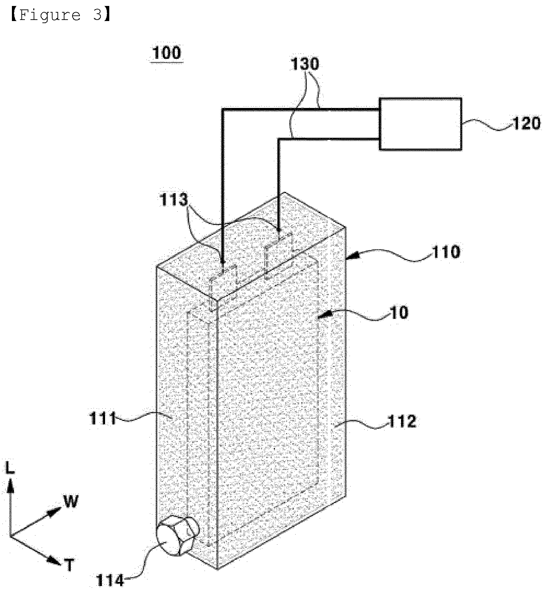

FIG. 3 is a perspective view of a battery cell pressurization device according to an embodiment of the present invention and a battery cell charging and discharging device comprising the same.

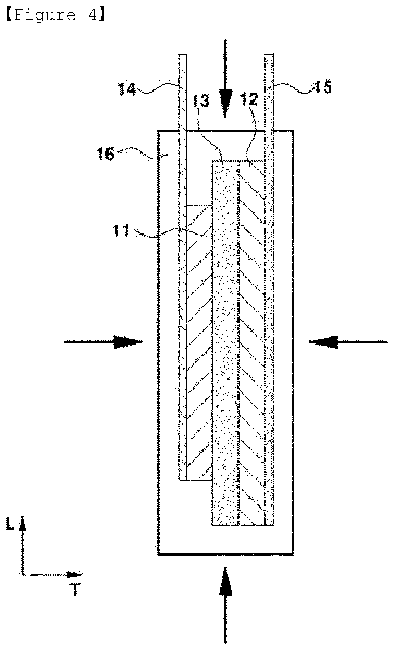

FIG. 4 is a cross-sectional view of a battery cell pressurized by a battery cell pressurization device according to an embodiment of the present invention.

Referring to the drawing, the battery cell charging and discharging device (100) according to an embodiment of the present invention is a battery cell pressurization device (110) and a charger/discharger (120) for charging/discharging the battery cell (10) pressurized by the battery cell pressurization device (110). In addition, an electrically conductive member (130) for applying current to the battery cell (10) by connecting the battery cell (10) to the charger/discharger (120) is further comprised.

The battery cell pressurization device (110) comprises a case (111) in which the battery cell (10) is disposed therein and a fluid (112) filling the inside of the case (111) and pressurizing the battery cell (10).

The shape of the case (111) is not particularly limited, and may have, for example, a rectangular shape. The case (111) may have pressure resistance that is not deformed by the pressure of the fluid (112). For example, the case (111) may not be deformed at several to several tens of MPa or less, for example, 20 MPa, 15 MPa, or 10 MPa or less. More specifically, the case (111) may be pressurized by the fluid (112) at a pressure of 3 MPa or more and 10 MPa or less, 4 MPa or more and 8 MPa or less, 5 MPa or more and 6 MPa or less, and may not be deformed within the above pressure range. In addition, the case (111) may have water resistance to prevent penetration of the fluid (112). From this point of view, as a material for forming the case (111), metals such as aluminum (Al), stainless steel (SUS), titanium (Ti), nickel (Ni), iron (Fe), and copper (Cu) or alloys of two or more of these metals may be used, but is not limited thereto.

The case (111) comprises a hole (113) through which an electrically conductive member (130), which connects the battery cell (10) to the charger/discharger (120) and applies current to the battery cell (10), passes. The hole (113) may be a plurality of holes (113) through which each of the plurality of electrically conductive members (130) connected to the positive electrode lead (14) and the negative electrode lead (15), respectively, passes.

A sealing member (not shown) may be disposed around the hole (113) to prevent the fluid (112) filling the inside of the case (111) from being emitted to the outside of the case (111). In other words, a sealing member may be disposed between the hole (113) and the electrically conductive member (130) to prevent the fluid (112) from being emitted to the outside of the case (111). The size of the hole (113) may be smaller than the size of the injection part (114) described later, but may also be equal to or larger than the size of the injection part (114) in some cases.

In addition, the case (111) may further include an injection part (114) that is a path through which the fluid (112) is injected into the case (111). The injection part (114) may have a structure that prevents the fluid (112) from being emitted to the outside of the case (111) even under pressure of the fluid (112) inside the case (111). The injection part (114) may include a hole for injecting the fluid (112) into the case (111) and a stopper for closing and sealing the hole after the fluid (112) is injected. However, the structure of the injection part (114) is not limited thereto.

The fluid (112) pressurizes the battery cell (10) in the activation process of charging/discharging the battery cell (10) with the charger/discharger (120). In the present invention, by using the fluid (112) as a pressurizing means for the battery cell (10), the battery cell (10) is uniformly pressurized in an isotropic manner. That is, the fluid (112) isotropically pressurizes the battery cell (10).

The pressure applied to the battery cell (10) by the fluid (112) may be 3 MPa or more and 10 MPa or less, 4 MPa or more and 8 MPa or less, or 5 MPa or more and 6 MPa or less. If the pressure applied to the battery cell (10) by the fluid (112) is less than 3 MPa, the battery cell (10) may not be sufficiently pressurized, causing expansion of the battery cell (10) due to gas. In addition, if the pressure applied to the battery cell (10) by the fluid (112) exceeds 10 MPa, physical and chemical damage to the battery cell (10) may occur. Preferably, the pressure applied to the battery cell (10) by the fluid (112) may be about 5 MPa.

As the fluid (112), a material that is not deformed by the pressure of the fluid (112) itself may be used. The fluid (112) may be a liquid, and specifically may be in an oil or gel state. However, depending on the design, a gas or a flowable solid may be also used as the fluid (112).

In addition, as the fluid (112), it may be preferable to use a material that is not deformed in a temperature range of 0 to 100 °C. The above range is meant to include the boundary values of 0 °C and 100 °C. For example, as the fluid (112), it may be preferable to use a material that has little change in volume in the above temperature range and is not hardened.

In addition, as the fluid (112), a material that does not affect the performance or lifespan of the battery cell (10) may be used, and an insulating material may be used.

Also, as the fluid (112), a viscous material may be used. For example, the viscosity of the fluid (112) may be 1000 cP or less, preferably about 100 cP. Through this, the fluid (112) and the pressure of the fluid (112) may be uniformly distributed over the entire area of the battery cell (10).

The charger/discharger (120) applies a current to the battery cell (10) through the electrically conductive member (130) and activates the battery cell (10) by charging/discharging it. The charger/discharger (120) detects a defect in open circuit voltage (OCV) while aging after fully charging the battery cell (10), and thereafter, it can be performed using various known types of processes, such as a method of fully discharging again to measure the discharging capacity, and then charging to 50% of the capacity for shipment. For example, the activation process may be performed under conditions of a current of 0.05C to 1C and a voltage of 1.5V to 5.0V, but is not limited thereto.

The electrically conductive member (130) may serve to apply current to the battery cell (10) by connecting the battery cell (10) to the charger/discharger (120). The electrically conductive member (130) may be a plurality of electrically conductive members (130) connected to the positive electrode lead (14) and the negative electrode lead (15), respectively. As a material for forming the electrically conductive member (130), an electrically conductive material may be used without limitation. For example, the electrically conductive member (130) may be a conductive wire.

Meanwhile, the battery cell (10) pressurized by the battery cell pressurization device is as described above in relation to FIGs. 1 and 2. Specifically, the battery cell (10) pressurized by the battery cell pressurization device comprises a positive electrode (11), a negative electrode (12), and a solid electrolyte (13). In addition, a positive electrode lead (14) and a negative electrode lead (15) connected to each of the positive electrode (11) and the negative electrode (12) may be further comprised.

The battery cell (10) may be a pouch-type battery cell in which the positive electrode (11), the negative electrode (12) and the solid electrolyte (13) of the battery cell (10) are embedded in the pouch (16) and in which some of the leads (14, 15) are exposed to the outside of the pouch (16). The pouch-type battery cell (10) may be manufactured by placing the solid electrolyte (13) between the positive electrode (11) and the negative electrode (12) and applying a cold isostatic press (CIP) or a warm isostatic press (WIP) to bond the layers, and then by attaching the positive electrode lead (14) and the negative electrode lead (15), putting the formed electrode assembly into the pouch (16) and sealing it.

Meanwhile, at least two of the size of the positive electrode (11), the size of the negative electrode (12), and the size of the solid electrolyte (13) of the battery cell (10) are different from each other. For example, the size of the positive electrode (11) may be smaller than the size of the negative electrode (12) and the size of the solid electrolyte (13), respectively. Here, the size may mean at least one of a length in the longitudinal direction (L) and a length in the width direction (W).

However, the structure of a battery cell pressurized by the battery cell pressurization device (110) and activated by the battery cell charging and discharging device (100) according to an embodiment of the present invention is not limited to the structure of the battery cell (10) shown in the drawings.

According to the battery cell charging and discharging device (100) according to an embodiment of the present invention, the fluid (112) is injected into the case (111) through the injection part (114) of the case (111) in which the battery cell (10) is disposed, and the injected fluid (112) uniformly pressurizes the battery cell (10) isotropically. In this state, the battery cell (10) can be activated by charging/discharging with the charger/discharger (120). Therefore, it is possible to prevent problems such as damage to battery cells such as cracks and the occurrence of short circuit defects, due to the difference in size among the positive electrode (11), the negative electrode (12), and the solid electrolyte (13). For example, even if the size of the positive electrode (11) is smaller than the size of the solid electrolyte (13), it is possible to avoid the problem of cracking in the solid electrolyte (13), and thus it is also possible to prevent the problem of short circuit defect caused by contact between the positive electrode (11) and the negative electrode (12) or lithium precipitation during the charging/discharging. In addition, by preventing damage such as a crack of the battery cell and a short circuit defect caused by it, it is also possible to prevent deterioration in the performance and lifetime of the battery cell.

In the above, one embodiment of the present invention has been described as an example, but the embodiment of the present invention is not intended to be limited to the above-described embodiment.

In this specification, the order of the first, second, etc. is for distinguishing the components from each other, and does not mean a priority order between the components or an absolute order. A first element in one part of this specification may be referred to as a second element in another part of this specification.

The terms and expressions herein should be interpreted broadly and should not be construed in a limiting sense. In this specification, the expression 'comprising' does not exclude the presence or addition of one or more other components other than the stated components.

In this specification, expression in the singular comprises the plural unless explicitly excluded by context.

Each embodiment described as an example in this specification can be combined with each other, and unless contradictory, what is described in a specific embodiment may equally apply to other embodiments even if not described in other embodiments.

### [Description of Symbol]

- 10:: Battery cell
- 11:: Positive electrode
- 12:: Negative electrode
- 13:: Solid electrolyte
- 14:: Positive electrode lead
- 15:: Negative electrode lead
- 16:: Pouch
- 100:: Battery cell charging and discharging device
- 110, 210:: Battery cell pressurization device
- 111:: Case
- 112:: Fluid
- 113:: Hole
- 114:: Injection part
- 120:: charger/discharger
- 130:: electrically conductive member
- 211, 212:: Jig

## Claims

1. A battery cell pressurization device (110), comprising:
a case (111) configured to receive a battery cell (10); and
a fluid (112) inside of the case (111) pressurizing the battery cell (10),
wherein the case (111) comprises an opening (113) configured to pass an electrically conductive member (130) through the opening (113) to connect the battery cell (10) to a charger/discharger (120), and
wherein the electrically conductive member (130) is configured to apply a current to the battery cell (10),
**characterised in that**
the fluid (112) isotropically pressurizes the battery cell (10) during an activation process of charging/discharging the battery cell (10) with the charger/discharger (120),
**in that** the battery cell (10) comprises a positive electrode (11), a negative electrode (12) and a solid electrolyte (13), and
**in that** at least two among a size of the positive electrode (11), a size of the negative electrode (12), and a size of the solid electrolyte (13) are different from each other.

2. The battery cell pressurization device (110) according to claim 1, wherein the case (111) further comprises an injection part (114), and
wherein the injection part (114) comprises a path through which the fluid (112) is injected into the case (111).

3. The battery cell pressurization device (110) according to claim 1, wherein the pressure applied to the battery cell (10) by the fluid (112) is 3 MPa or more and 10 MPa or less.

4. The battery cell pressurization device (110) according to claim 1, wherein the fluid (112) comprises an insulating and viscous material.

5. The battery cell pressurization device (110) according to claim 1, wherein the fluid (112) is in a state of oil or gel.

6. The battery cell pressurization device (110) according to claim 1, wherein the case (111) has pressure resistance against deformation at a pressure of 3 MPa or more and 10 MPa or less.

7. The battery cell pressurization device (110) according to claim 1, wherein the battery cell (10) is a pouch-type battery cell (10).

8. A battery cell charging and discharging device (100) comprising:
the battery cell pressurization device (110) according to any one of claims 1 to 7; and
the charger/discharger (120) for charging/discharging the battery cell (10) pressurized by the battery cell pressurization device (110).

## Patentansprüche

1. Batteriezellendruckbeaufschlagungsvorrichtung (110) aufweisend:
ein Gehäuse (111), das konfiguriert ist, eine Batteriezelle (10) aufzunehmen; und
ein Fluid (112) innerhalb des Gehäuses (111), das die Batteriezelle (10) unter Druck setzt,
wobei das Gehäuse (111) eine Öffnung (113) aufweist, die konfiguriert ist, ein elektrisch leitfähiges Element (130) durch die Öffnung (113) zu führen, um die Batteriezelle (10) mit einem Lade-/Entladegerät (120) zu verbinden, und
wobei das elektrisch leitfähige Element (130) konfiguriert ist, einen Strom an die Batteriezelle (10) anzulegen,
**dadurch gekennzeichnet, dass**
das Fluid (112) die Batteriezelle (10) während eines Aktivierungsprozesses des Ladens/Entladens der Batteriezelle (10) mit dem Lade-/Entladegerät (120) isotrop unter Druck setzt,
dass die Batteriezelle (10) eine positive Elektrode (11), eine negative Elektrode (12) und einen Festelektrolyten (13) aufweist, und
dass mindestens zwei von einer Größe der positiven Elektrode (11), einer Größe der negativen Elektrode (12) und einer Größe des Festelektrolyten (13) voneinander verschieden sind.

2. Batteriezellendruckbeaufschlagungsvorrichtung (110) nach Anspruch 1, wobei das Gehäuse (111) ferner ein Injektionsteil (114) aufweist, und
wobei das Injektionsteil (114) einen Pfad aufweist, durch den das Fluid (112) in das Gehäuse (111) injiziert wird.

3. Batteriezellendruckbeaufschlagungsvorrichtung (110) nach Anspruch 1, wobei der durch das Fluid (112) an die Batteriezelle (10) angelegte Druck 3 MPa oder mehr und 10 MPa oder weniger beträgt.

4. Batteriezellendruckbeaufschlagungsvorrichtung (110) nach Anspruch 1, wobei das Fluid (112) ein isolierendes und viskoses Material enthält.

5. Batteriezellendruckbeaufschlagungsvorrichtung (110) nach Anspruch 1, wobei das Fluid (112) in einem Ölzustand oder einem Gelzustand vorliegt.

6. Batteriezellendruckbeaufschlagungsvorrichtung (110) nach Anspruch 1, wobei das Gehäuse (111) einen Druckwiderstand gegen Verformung bei einem Druck von 3 MPa oder mehr und 10 MPa oder weniger aufweist.

7. Batteriezellendruckbeaufschlagungsvorrichtung (110) nach Anspruch 1, wobei die Batteriezelle (10) eine pouchförmige Batteriezelle (10) ist.

8. Batteriezellenlade-und-Entladevorrichtung (100) aufweisend:
die Batteriezellendruckbeaufschlagungsvorrichtung (110) nach einem der Ansprüche 1 bis 7; und
das Lade-/Entladegerät (120) zum Laden/Entladen der Batteriezelle (10), die durch die Batteriezellendruckbeaufschlagungsvorrichtung (110) unter Druck gesetzt wird.

## Revendications

1. Dispositif de pressurisation de cellule de batterie (110), comprenant :
un boîtier (111) configuré pour recevoir une cellule de batterie (10) ; et
un fluide (112) à l'intérieur du boîtier (111) mettant sous pression la cellule de batterie (10),
le boîtier (111) comprenant une ouverture (113) configurée pour faire passer un élément électro-conducteur (130) à travers l'ouverture (113) afin de connecter la cellule de batterie (10) à un chargeur/déchargeur (120), et
l'élément électro-conducteur (130) étant configuré pour appliquer un courant sur la cellule de batterie (10),
**caractérisé**
**en ce que** le fluide (112) met sous pression au plan isotrope la cellule de batterie (10) au cours d'un processus d'activation de charge/décharge de la cellule de batterie (10) à l'aide du chargeur/ déchargeur (120),
**en ce que** la cellule de batterie (10) comprend une électrode positive (11), une électrode négative (12) et un électrolyte solide (13), et
**en ce qu'**au moins deux d'une taille de l'électrode positive (11), d'une taille de l'électrode négative (12), et d'une taille de l'électrolyte solide (13) diffèrent l'un de l'autre.

2. Dispositif de pressurisation de cellule de batterie (110) selon la revendication 1, le boîtier (111) comprenant en outre une partie d'injection (114), et
la partie d'injection (114) comprenant un chemin par lequel le fluide (112) est injecté dans le boîtier (111).

3. Dispositif de pressurisation de la cellule de batterie (110) selon la revendication 1, la pression exercée sur la cellule de batterie (10) par le fluide (112) allant de 3 MPa ou davantage à 10 MPa ou moins.

4. Dispositif de pressurisation de cellule de batterie (110) selon la revendication 1, le fluide (112) comportant une matière isolante et visqueuse.

5. Dispositif de pressurisation de cellule de batterie (110) selon la revendication 1, le fluide (112) se trouvant à l'état huileux ou de gel.

6. Dispositif de pressurisation de la cellule de batterie (110) selon la revendication 1, le boîtier (111) présentant une résistance à la pression contre les déformations sous une pression allant de 3 MPa ou davantage à 10 MPa ou moins.

7. Dispositif de pressurisation de cellule de batterie (110) selon la revendication 1, la cellule de batterie (10) étant une cellule de batterie du type poche (10).

8. Dispositif de charge et décharge de cellules de batterie (100) comprenant :
le dispositif de pressurisation d'une cellule de batterie (110) selon une quelconque des revendications 1 à 7 ; et
le chargeur/déchargeur (120) pour charger/décharger la cellule de batterie (10) mise sous pression par le dispositif de pressurisation de cellule de batterie (110).
